(19) Europäisches Patentamt / European Patent Office / Office européen des brevets

(11) **EP 4 336 944 A1**

(12) **EUROPEAN PATENT APPLICATION**
published in accordance with Art. 153(4) EPC

(43) Date of publication:
**13.03.2024 Bulletin 2024/11**

(21) Application number: **22799165.0**

(22) Date of filing: **06.05.2022**

(51) International Patent Classification (IPC):
*H04W 74/08* (2024.01)     *H04W 4/40* (2018.01)
*H04W 4/90* (2018.01)      *H04W 4/44* (2018.01)
*H04W 4/12* (2009.01)      *H04W 56/00* (2009.01)
*H04W 4/08* (2009.01)      *H04W 4/50* (2018.01)

(52) Cooperative Patent Classification (CPC):
H04W 4/08; H04W 4/12; H04W 4/40; H04W 4/44;
H04W 4/50; H04W 4/90; H04W 56/00;
H04W 74/08; Y02D 30/70

(86) International application number:
**PCT/KR2022/006512**

(87) International publication number:
**WO 2022/235122 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.05.2021  KR 20210058412**
**24.03.2022  KR 20220036368**

(71) Applicant: **LG Electronics Inc.**
**Yeongdeungpo-gu**
**Seoul 07336 (KR)**

(72) Inventors:
• **JAEGAL, Chan**
  **Seoul 06772 (KR)**
• **SEO, Hanbyul**
  **Seoul 06772 (KR)**
• **KIM, Heejin**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR ADJUSTING PERIODIC MESSAGE GENERATION TIME POINT IN V2X TERMINAL IN WIRELESS COMMUNICATION SYSTEM**

(57) In one embodiment, a method of operation in relation to a vulnerable road user (VRU) in a wireless communication system comprises: obtaining a global timing by a VRU; generating a message by the VRU; and transmitting the message to a server by the VRU, wherein an adjustment offset commonly applied to all VRUs included in a VRU cluster associated with the server is applied to generation of the message.

FIG. 4

Acquire global timing ⎯ S401

Generate prescribed message ⎯ S402

Transmit prescribed message to server ⎯ S403

EP 4 336 944 A1

**Description**

**TECHNICAL FIELD**

The following disclosure relates to a wireless communication system, and more particularly, to a method and apparatus for adjusting a periodic message generation timing of a V2X User Equipment (UE).

**BACKGROUND ART**

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

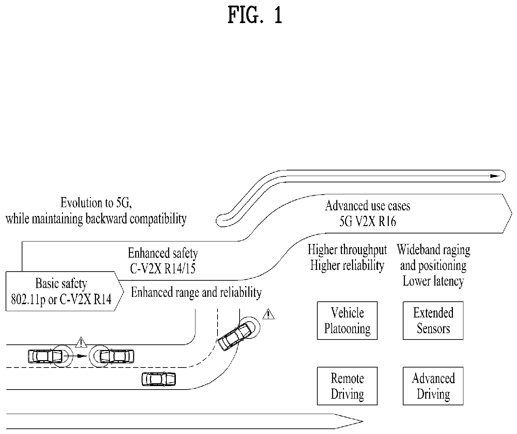

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

DETAILED DESCRIPTION OF DISCLOSURE

TECHNICAL TASK

One technical task of embodiment(s) is to provide a method for UEs with similar characteristics to generate periodic messages according to the clustering and aggregation timing of a central system.

**TECHNICAL SOLUTIONS**

In one technical aspect of the present disclosure, provided is a method of performing an operation related to a Vulnerable Road User (VRU) in a wireless communication system, the method including acquiring a global timing by the VRU, generating a prescribed message by the VRU, and transmitting the prescribed message to a server by the VRU, wherein an adjustment offset applied commonly to VRUs included in a VRU cluster related to the server may be applied to the generating the prescribed message.

In another technical aspect of the present disclosure, provided is a VRU in a wireless communication system, the VRU including at least one processor and at least one computer memory connected operably to the at least one processor and configured to store instructions for enabling the at least one processor to perform operations when executed, wherein the operations may include acquiring a global timing by the VRU, generating a prescribed message by the VRU, and transmitting the prescribed message to a server by the VRU and wherein an adjustment offset applied commonly to VRUs included in a VRU cluster related to the server may be applied to the generating the prescribed message.

In further technical aspect of the present disclosure, provided is a processor performing operations for a VRU in a wireless communication system, the operations including acquiring a global timing by the VRU, generating a prescribed message by the VRU, and transmitting the prescribed message to a server by the VRU, wherein an adjustment offset applied commonly to VRUs included in a VRU cluster related to the server may be applied to the generating the prescribed message.

In another further technical aspect of the present disclosure, provided is a non-volatile computer-readable storage medium storing at least one computer program comprising an instruction configured to enable at least one processor to perform operations for a VRU when executed by the at least one processor, the operations including acquiring a global timing by the VRU, generating a prescribed message by the VRU, and transmitting the prescribed message to a server by the VRU, wherein an adjustment offset applied commonly to VRUs included in a VRU cluster related to the server may be applied to the generating the prescribed message.

The adjustment offset may be calculated based on a geographical partition unit and a classification level value to which the VRU belongs or a collision assessment result performed by the VRU

The classification level value may be configured differently according to a device type or congestion.

The adjustment offset may be selected from one or more adjustment offsets to enable the VRU to transmit a message at a timing closest to a message transmission timing based on a period before applying the adjustment offset.

The adjustment offset may be selected from one or more adjustment offsets to enable to the VRU to generate a message most quickly.

The selection of the adjustment offset to enable the VRU to generate the message most quickly may be performed based on not transmitting the message by the VRU for a prescribed time before determining the adjustment offset.

The selection of the adjustment offset to enable the VRU to generate the message most quickly may be performed based on waking up in sleep mode by the VRU.

The cluster related operation may include generating a cluster or joining a cluster.

The one or more adjustment offsets may be received from a network.

The one or more adjustment offsets may be calculated by the VRU.

The message may include a VRU Awareness Message (VAM).

## ADVANTAGEOUS EFFECTS

According to one embodiment, real time of information may be secured as much as possible by minimizing a time interval from a message (information) generation timing of a UE to clustering or aggregation.

## DESCRIPTION OF DRAWINGS

The accompanying drawings, which are included to provide a further understanding of the disclosure and are incorporated in and constitute a part of this application, illustrate embodiment(s) of the disclosure and together with the description serve to explain the principle of the disclosure.

FIG. 1 is a diagram to describe pre-NR RAT based V2X communication and NR based V2X communication by comparison.

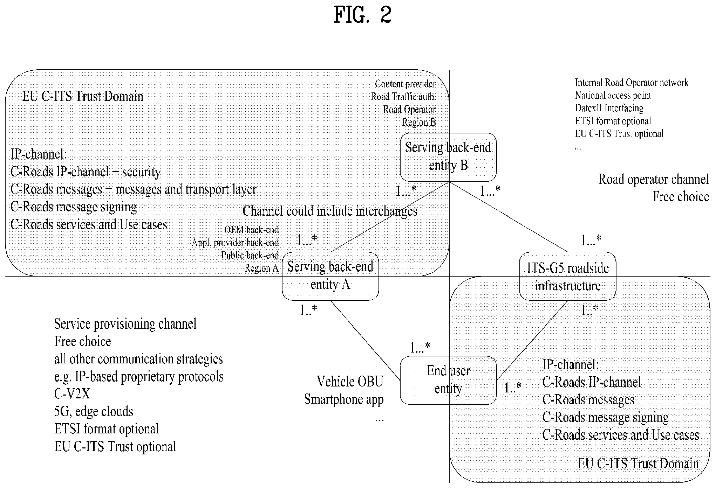

FIG. 2 is diagram illustrating the definitions of functions and profiles required for communication between a serving back-end entity A and a Serving back-end entity B in C-ITS.

FIG. 3 is a diagram illustrating a basic IP interface for C-ITS message exchange.

FIGs. 4 to 11 are diagrams illustrating embodiments(s).

FIGs. 12 to 18 are diagrams illustrating various devices to which embodiments(s) are applicable.

## BEST MODE FOR DISCLOSURE

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

## C-ITS communication

FIG. illustrates the definition of functions and profiles necessary for communication between a serving back-end entity A and a serving back-end entity B in the existing technology that defines the interoperability of back-end hybrid Cooperative-Intelligent Transport Systems (C-ITS) communication. C-ITS information obtained through an end user entity or a roadside infrastructure may be shared through interconnection between back-end entity servers connected to the respective entities. In the related art, one entity that shares information through an IP-based C-ITS interface is defined using the term s C-ITS actor or a third party. C-ITS factors typically operate based on one country/area and maintain a connection between entities to share/consume information within the relevant area. An interface used to share information is defined as a Basic Interface (BI), and may be defined separately from a deployment model selected by the C-ITS actor.

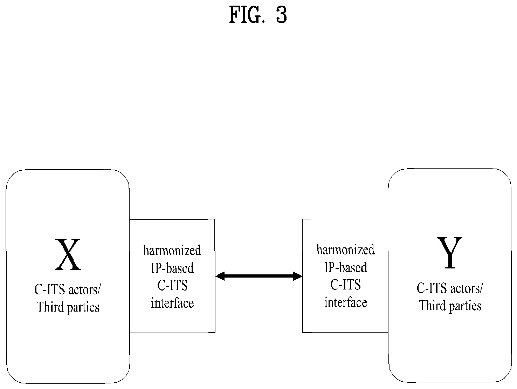

FIG. 3 illustrates a basic IP interface for C-ITS message exchange. In FIG. 3, C-ITS actors refers to a corporation or organization that operates a C-ITS station or provides C-ITS services based on high-quality traffic information. Advanced Message Queuing Protocol (AMQP) is a binary application layer protocol designed to efficiently support various messaging applications and communication patterns. An AMQP broker is an architectural pattern for message routing. Decoupling is effectively implemented by mediating communication between application programs to minimize mutual recognition that applications need to know each other to exchange messages. In this specification, the AMQP broker a C-ITS message for routing. The C-ITS message is a signed message defined by ETSI and ISO and profiled in the C-ROADS Roadside System Profile (RSP). Third parties refer to all organizations that have contracts with the C-ITS Actor.

In the related art, the functional requirements that BI and C-ITS factors should have are defined, and the main requirements are shown in Table 1 below.

[Table 1]

| |
|---|
| - BI shall allow C-ITS actors to publish and subscribe to C-ITS messages. |
| - BI shall allow to filter C-ITS messages according to filtering mechanism. |
| - BI shall allow to route C-ITS messages |
| - Filtering by AMQP brokers shall be done without reading the AMQP payload |
| - A broker shall never remove, alter or add anything to a message payload |
| - A broker shall never remove or alter any of the AMQP application properties field. |
| - A broker should drop malformed AMQP messages that do not adhere to this specification or any extension of it and shall log the event. |

The BI is an interface used between C-ITS factors, and the protocol and profile of BI defined in the related art are shown in Table 2.

[Table 2]

| |
|---|
| - BI shall use IPv4 and TCP. |
| - BI shall implement TLS 1.3. |
| - BI shall use AMQP version 1.0. |
| - Filtering mechanism focuses more on DENM and IVIM. |
| - All AMQP Clients and Brokers shall support filtering on application properties |
| - All mandatory fields shall be present for publishing for all C-ITS messages. |
| - Filtering shall be requested by consumer based on selected fields. |
| - All AMQP messages with a DENM as payload exchanged in BI shall contain information |

Data fields used to filter all C-ITS messages are shown in Table 3. In Table 2, data field that can be included optionally are serviceType, longitude, and latitude. Other data fields are mandatory and should be included in the application properties field of the AMQP message for filtering.

[Table 3]

| Name | Value and type | Description |
|---|---|---|
| publishId | String A two-letter country code and a numerical identifier e.g. "AT00001", "DE15608" | Unique ID of the publisher It is Linked to the country where the provider wants to register. It could be in one country or several. |
| originatingCountry | Country code | where the C-ITS message is created |
| protocolVersion | String e.g. "DENM:1.2.2", "IVIM: 1.2.1" | Represent the version of standard used to create the message, |
| service Type | String | Acronym defined in C-Roads_Common C-ITS Service Definitions |

(continued)

| Name | Value and type | Description |
| --- | --- | --- |
| messageType | String DENM, IVIM, SPATEM, MAPEM, SREM, SSEM, CAM | For this version of the specification the string shall be one of the following: DENM, IVIM, SPATEM, MAPEM, SREM, SSEM, and CAM. The list may be subject to changes in future versions of the specification |
| longitude | Float | Longitude of the event published; DENM(eventPosition), IVI (referencePosition) |
| latitude | Float | Latitude of the event published; DENM(eventPosition), IVI (referencePosition) |
| quadTree | String | Relevant spatial index location of the C-ITS message |

In addition, for DENM message filtering, in the related art, causeCode and subCauseCode values included in DENM should be included as mandatory in an application properties field of the AMQP.

For, IVIM message filtering, iviType, pictogramCategramCode, and iviContainer values may be included as optional in the application properties field of the AMQP.

**VRU Clustering**

The purpose of clustering is to reduce the size of data used for communication by transmitting a message (e.g., VAM) for VRU protection only to a single device representing Vulnerable Road User (VRU) devices included in a specific area.

VRU clustering that supports short range communication is performed through a message (e.g., VAM broadcasting) for VRU protection, including operations such as Creation, Join, Leave, Breakup and the like between devices. A leader of a cluster creates the cluster and transmits various cluster information such as an area covered by the leader, the number of joining members and the like, in a manner of including the cluster information in a message (e.g., a cluster VAM) for VRU protection. Other VRU devices (e.g., cluster members) having succeeded in joining the corresponding cluster stop transmitting VRU protection messages (e.g., individual VAMs) that were transmitted individually.

If long range communication is used for a VRU protection service, clustering can be performed more efficiently because a series of operations (e.g., create, join, leave, breakup) that occur during VRU clustering performed through short range communication can be performed through server management rather than through message exchange between VRUs. If a server manages clustering, it may receive VRU messages and collect/analyze/extract cluster information. Then, the server may transmit cluster information created through analyses/combinations by itself to other servers connected to the corresponding server.

Yet, when a central system, such as a server, clusters or aggregates a message from each UE (e.g., a VRU UE) in a long range communication transmission environment, as there occurs 'waiting time' from a message generation timing of each UE to aggregation, data elements in some messages lose their values in the real-time aspect over time, and thus there is a possibility that the benefit will be deprecated. In addition, as the aforementioned 'waiting time' occurs, an end-to-end message delivery latency increases.

Besides, if the number or amount of messages transmitted from UEs to the central system is higher than the number of times the central system transmits messages to another system through a clustering or aggregation process, the UEs transmits unnecessary messages, thereby increasing data generation and processing load and wasting bandwidth consumption. For example, when clustering is performed once in a central system, if messages are generated/transmitted twice or more times from a specific UE, it may be considered that unnecessary message generation/transmission by UEs has occurred once.

Hereinafter, in the present disclosure, when a central system such as a server clusters or aggregates information of UEs with similar characteristics (e.g., position, dynamics, etc.) in Uu (long range communication) environment, an offset application instruction of the central system and an application method of a UE are proposed so that the corresponding UEs have the same message generation timing as possible.

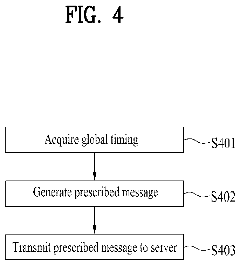

A VRU according to one embodiment may acquire a global timing (S401 of FIG. 4) and then generate a prescribed message (S402), and may transmit the prescribed message to a server (S403).

Here, an adjustment offset commonly applied to VRUs included in a VRU cluster related to the server may be applied to the prescribed message generation. The adjustment offset refers to a time difference of a predetermined value from a specific timing so that UEs of several groups connected to the central system can generate messages at different times per group. For example, each group varies the message generation timing for each group by applying each adjustment offset so that the central system may receive messages at the same time from UEs belonging to the same group by.

The adjustment offset may be calculated based on a geographical partition unit and a classification level value to which the VRU belongs or a collision assessment result performed by the VRU. The classification level value may be configured differently according to the device type or congestion. That is, the adjustment offset may not be designated as a specific value, but may be designated as a value calculated using attributes of UEs as variables. For example, UEs in the same tile (area) use the same tile index as a variable so that they may have the same adjustment offset value. Through this, messages that need to be clustered or aggregated together may be adjusted to be generated at similar timings while distributing the arrival timings of messages from a central system perspective and maintaining the appropriate number of incoming messages at the same time. For another example, UEs with a similar risk of collision may have the same adjustment offset value due to the collision assessment result performed by the central system or the UE itself, so that UEs with a risk of collision may ensure real-time of information acquisition for situations that require rapid and frequent message transmissions. This process also allows the central system to calculate and inform the UE of the adjustment offset, or to calculate the adjustment offset value by itself based on the information apprehended by the UE.

The adjustment offset may be specified with a predefined specific value. For example, all UEs in a particular area have the same adjustment offset, so that all messages are generated at similar timings, and the central system may operate to process them simultaneously with less latency. In this process, the central system may inform a UE of an adjustment offset value, or the UE may select a pre-defined adjustment offset value by itself according to the information apprehended by the UE.

The adjustment offset may be received from the central system or selected/determined by the UE itself. Regarding the former, as soon as the central system starts to operate, it may transmit an 'adjustment offset' to the UE. When an 'adjustment offset' transmission update timer of the central system expires, it may be transmitted to the UE. The central system may apprehend changes in UE's attributes through message reception from the UE. The central system may reselect/re-extract the "adjustment offset" and transmit it to the UE, if the attributes meet predefined conditions or exceed a threshold. For example, if it is apprehended that more than a predetermined number of UEs are found to have moved a tile through messages received from UEs, the central system transmits an 'adjustment offset' to the UE to match a generation timing with other UEs existing in the tile where the UE moved. Regarding the latter, the UE may calculate or select an 'adjustment offset' as soon as it starts to operate. (Since it is the UE's own operation, a transmission process is not required.) The UE may re-calculate or re-apply the adjustment offset when the adjustment offset update timer expires. The UE may apprehend changes in the UE's attributes through the reception of messages, GNSS information and the like from the central system or other UEs, and reselect/recalculate the "adjustment offset" if the attributes meet predefined conditions or exceed the threshold. For example, if the risk of collision exceeds the threshold depending on the result of collision assessment, the UE may reselect/recalculate the adjustment offset, change the cycle of message transmission, or transmit the message without the application of the adjustment offset by recognizing it as a situation in proportion to an emergency.

Subsequently, an adjustment offset selecting method is as follows.

First, among the one or more adjustment offsets, the adjustment offset may be selected to allow the VRU to transmit a message at a timing closest to a message transmission timing based on a period (or frequency) before applying the adjustment offset. When the UE receives a plurality of adjustment offsets from the central system or selects/calculates an adjustment offset by itself, the UE selects an adjustment offset, which is capable of generating a message at a timing closest to the message generation timing before applying the adjustment offset, as its own adjustment offset. For example, the central system transmits n adjustment offsets such as offset_0, offset 1 ... offset_n to the UE, the UE calculates $|T\_GenMsgMax-(T\_GenMsg+offset\_i)|$ for each $i^{th}$ offset (offset_i) and selects the $i^{th}$ offset enabling to have the smallest value as the adjustment offset to be applied by the UE itself. In the present disclosure, T_GenMsg may mean an elapsed time after message generation, T_GenMsgMax may mean a maximum value of an elapsed time after message generation, and T_GenMsgMin may mean a minimum value of an elapsed time after message generation.

Second, the adjustment offset may be selected to allow the VRU to generate a message most quickly among the one or more adjustment offsets. That is, since the adjustment offset is commonly applied to VRUs included in the VRU cluster as described above, it may be advantageous from a safety perspective to apply it quickly to transmit a message. Here, the selection of the adjustment offset that allows the VRU to generate the message most quickly may be performed based on the VRU not transmitting the message for a prescribed time before determining the adjustment offset. The UE selects the adjustment offset that may generate a message most quickly as its own adjustment offset when applying the adjustment offset. For example, when the central system transmits n adjustment offsets such as offset_0, offset_1 ... offset_n to the UE, the UE calculates $(T\_GenMsg+offset\_i)$ for each $i^{th}$ offset (offset_i) and selects an $i^{th}$ offset enabling to have the smallest value as the adjustment offset to be applied by the UE itself.

The second method may be used as an alternative method to the first method according to the situation or characteristics of the UE or the central system. In the first method, a message should be generated before generating an adjustment offset, so if a VRU wakes up in sleep mode (message triggering or adjustment offset reception) and there is no existing message generation period (or frequency), or if the UE calculates an adjustment offset first as soon as it operates, only the second method is applicable instead of the first method. In other words, the selection of the adjustment offset that allows the VRU to generate a message most quickly may be performed based on that the VRU wakes up in the sleep mode.

In addition, as soon as the UE is powered on and a service/application for V2X message generation is activated, the UE may make a request for an "adjustment offset" to the central system and receive and apply a response to it from the central system, or select/calculate an adjustment offset by itself. That is, the UE may apply an adjustment offset during provisioning.

In addition, the UE may apply an adjustment offset at any timing after receiving the adjustment offset from the central system after service activation or after the UE have selected/calculated the adjustment offset by itself. In other words, while the UE generates a message according to an individual message generation timing and period (or frequency) depending on a message generation event triggering condition of UE's own, if the UE receives a new adjustment offset or selects/calculates an adjustment offset by itself., a message generation timing may be changed immediately.

Subsequently, each UE generates a message according to an applied 'adjustment offset'.

Each UE generates a first message generation event at a timing resulting from adding a time interval amounting to the adjustment offset to a previously acquired global current time. That is, a first message is generated.

After the first message has been generated, the each UE generates a subsequent message according to its own message generation frequency.

The message generation frequency is set to T_GenMsgMax in an application layer or a facility layer of the UE. When T_GenMsg > T_GenMsgMax, the UE generates a message.

The each UE may generate an instant message exceptionally irrespective of the message generation timing according to the 'adjustment offset' in the following cases. The following instant message generation references are the same as those defined in the existing standards (ETSI ITSS 103 300-VRU Basic Service, etc.).

- A case that a distance difference between a current location of a UE and a current location included in a last generated message exceeds a predefined threshold.
- A case that a difference between a current speed of a UE and a current speed included in a last generated message exceeds a predefined threshold
- A case that a e difference between a current proceeding direction of a UE and a proceeding orientation included in a last generated message exceeds a predefined threshold
- A case that a variation in 'collision/overlapping (interception) possibility for a measured trajectory of another UE or vehicle' currently measured by a UE with respect to 'collision/overlapping (interception) possibility for a measured trajectory of another UE or vehicle' included in a last generated message exceeds a predefined threshold
- A case that a distance between a UE and a vehicle or another UE in the transverse or longitudinal or vertical direction becomes smaller than a predefined minimum safe distance

Even in the following situations failing to be defined in the existing standards, an instant message may be generated exceptionally irrespective of a message generation timing according to an 'adjustment offset'.

In the case of an "emergency situation" apprehended by a central system or a UE itself, the UE immediately transmits a message irrespective of an adjustment offset, and the period of consecutive messages may also be transmitted at a shorter interval period different from an existing period. For example, when UEs whose collision risk exceeds a threshold depending on the result of collision assessment are determined as 'emergency situation', they may transmit messages immediately according to the decision made by a subject (e.g., central system or UE itself) of the collision assessment and also transmit consecutive messages by a period with a short interval different from that of an existing period.

When a UE intends to join a neighboring UE cluster (cluster), unlike the generation reference defined in the existing standard (ETSI ITS TS 103 300-VRU Basic Service, etc.), the proposed method does not generate an instant message. In other words, in this case, the existing standard is to generate an instant messages, but the proposed method does not generate an instant message. Since a subject that clusters or aggregates a message generated by a UE is a central system, there is no need to generate an instant messages for a neighboring UE (e.g., a cluster leader) and the UE may continue to generate messages by applying the an 'adjustment offset' specified by a server.

If a message generation elapsed time T_GenMsg before and after applying an 'adjustment offset' is greater than the UE's own message generation period (frequency), T_GenMsgMax, the UE may generate a message in two ways as follows.

At a timing after the application of the 'adjustment offset', the UE does not generate a message even if it becomes T_GenMsg> T_GenMsgMax, but generates the message at an adjusted/changed message generation timing.

Irrespective of the 'adjustment offset' application, the UE immediately generates a message at the timing when it becomes 'T_GenMsg>T_GenMsgMax'.

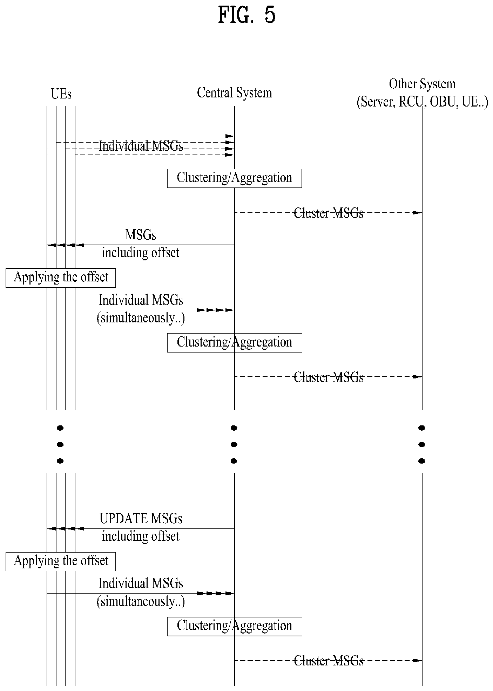

As described above, a message flow of a process for each UE to generate a periodic message according to a clustering and allegation timing of a central system is shown in FIG. 5.

The above description may assume the following environment and operation requirements.

A proposed V2X message transmission operation may be performed in a long or short range communication environment.

UEs periodically generate V2X messages for a central system or an RSU. Yet, the UE has a message generation timer T_GenMsgMax as an event triggering condition for message generation and generates a 'periodic' message in a manner of generating a message when an elapsed time T_GenMsg since last message generation exceeds a timer setting value, and the message generation timer setting value may be changed or ignored (e.g., message generation irrespective of the timer) depending on a situation (e.g., UE;s dynamics variation or congestion policy of the central system) of the UE or an external environment (e.g., central system). Yet, if the value of T_GenMsg is smaller than T_GenMsgMin (i.e., a message generation minimum time interval), the message generation may be omitted.

The central system clusters or aggregates messages received from UEs and delivers them to other central systems, UEs, OBUs (C-ITS On-Board Unit), and the like. In this case, UEs with similar characteristics, such as UEs existing in the same location/tile and UEs with similar collision risk due to the result of collision assessment, may be configured with two or more groups for clustering and aggregation. In addition, not all UEs are necessarily included in the group. That is, some UEs may generate individual messages according to individual generation timings and individual periods and transmit them to the central system.

UEs may acquire a global current time from a mounted device or a configured software module.

UEs intermittently receive an 'adjustment offset' for adjusting a message generation timing from the central system. Alternatively, the UE may apply a pre-defined "adjustment offset" by itself to change the message generation timing and period according to the characteristic information apprehended by the UE itself. The UEs performs transmission by applying the adjustment offset of the central system, but allow immediate message generation in an emergency situation. Upon receiving such an emergency messages, the central system may skip or minimize the clustering and aggregation process and transmit it to other systems (e.g., server, RSU, UE, OBU, etc.) as soon as possible.

By configuring as described above, UEs with similar characteristics may generate periodic messages according to the clustering and aggregation timing of the central system. Through this, it is possible to secure the real-time of information as much as possible by minimizing a time interval from UE's message (information) generation timing to clustering or aggregation. In addition, messages from UEs with similar characteristics are delivered to the central system at the same or similar timing to reduce the waiting time until clustering and aggregation, thereby minimizing end-to-end latency. In addition, by equalizing the number of clustering or aggregation of the central system and the number of message generation by the respective UEs, the number of generating messages unnecessarily by the UEs is decreased, thereby reducing data generation and processing load and decreasing bandwidth consumption.

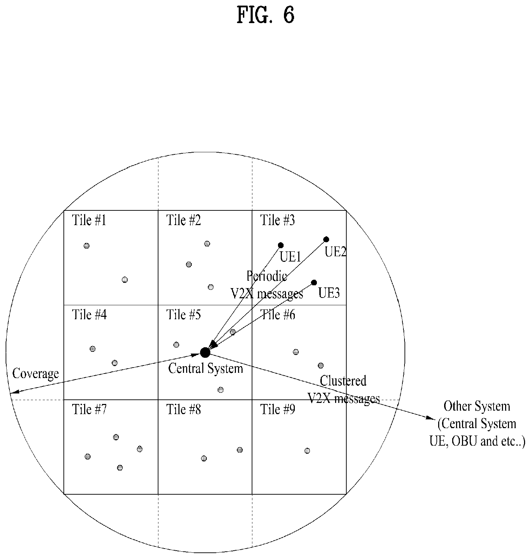

FIGs. 6 to 10 relate to specific examples to which the above description is applied. In FIG. 6, the deployment of the embodiment is illustrated. A central system divides an area within a coverage into tiles of a predetermined size and manages the area by numbering the tiles. Several UEs (UEs) exist within each tile, and UEs 1 to 3 exist in a tile #3 and periodically transmit V2X messages to the central system according to the same message generation frequency/period of 1.0 second. A. The central system calculates an adjustment offset using the indexes of the UEs in the following manner and transmits it to the UE.

$$\text{Adjustment offset} = [\{(\text{tile index}) \bmod (\text{classification level})\} * (\text{basic offset})]$$

The unit of the adjustment offset may be second, millisecond, or the like. Classification level is a value used to determine an extent of finely classifying the adjustment offset. For example, in case of intending to divide the adjustment offset into 10 steps, the classification level is applied as 10. The basic offset follows the value defined by the central system. In the present embodiment, the basic offset is set to 0.1 second. Hence, according to the above equation, when the tile index of UEs 1 to 3 is applied as 3, the classification level is applied as 10, and the basic offset is applied as 0.1 second, the adjustment offset for the corresponding tile is calculated as 0.3 seconds and the central system intermittently transmits this value to the corresponding UEs.

When a central system calculates a plurality of adjustment offsets and transmits them to a UE, the adjustment offsets are calculated using the following method.

- Each adjustment offset is calculated by uniformly dividing a message generation interval (period) of a UE. For example, if the message generation interval of the UE is 1 second, 0 second and 0.5 second are calculated as adjustment offsets when calculating two adjustment offsets. 0 second, 0.33 second, and 0.66 second are calculated as adjustment offsets when calculating three adjustment offsets.

- An adjustment offset is calculated as an arbitrary value according to performance, processing load, and scheduling operation of a central system.

Regarding the application of an adjustment offset of each UE, when a central system transmits one adjustment offset (0.3 seconds), a UE changes a message generation timing as soon as the UE receives it. When the central system transmits two adjustment offsets (0.3 seconds and 0.8 seconds), the UE immediately changes a message generation timing in a manner of selecting an adjustment offset to apply and then applying the selected adjustment offset by a following method. When T_GenMsg of the UE is 0.7s at the timing of receiving the adjustment offset from the central system, the UE applies $|T\_GenMsgMax-(T\_GenMsg+offset\_i)|$ with respect to offset_0 = 0.3s and offset_1 = 0.8s and then selects the adjustment offset having the smallest value among them. As calculation results are $|1.0-(0.7+0.3)| = 0$ and $|1.0-(0.7+0.8)| = 0.5$, respectively, offset_0 is selected as the adjustment offset that will be applied by the UE.

For a current global time of 0 o'clock 0 minute 0 second (i.e., midnight) acquired by each UE, UE1, UE21, and UE3 started generating message at 0.0s, 0.6s, and 0.4s, respectively. Thereafter, the UEs continue to generate messages by the same period with the same T_GenMsgMax value (1.0s), respectively. Each of the UEs receives an adjustment offset from a central system at a timing of a global time 2.7s, immediately applies the adjustment offset, and changes a message generation timing.

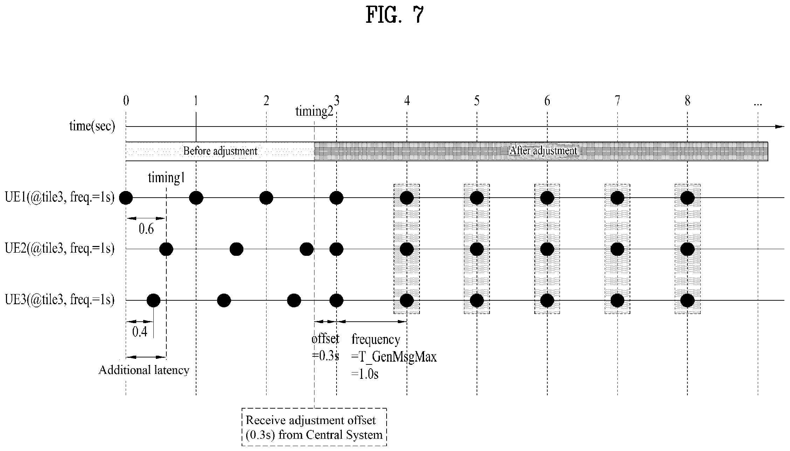

FIG. 7 shows a change in a message generation timing when a single offset is received. As shown, UEs UE1 to UE3 complete message generation at least once at timing 1. If a central system is waiting for at least one message reception from each if the UEs for clustering and aggregation, there occurs 'additional latency' of 0.6 seconds from 0s to the timing 1. After that, at a timing 2 point (2.7s), the UEs receive one adjustment offset value of 0.3s and immediately apply an adjustment offset to generate messages at 3.0s simultaneously. Therefore, the UEs do not generate 'additional latency' by simultaneously generating messages once every 1.0s from 3.0s.

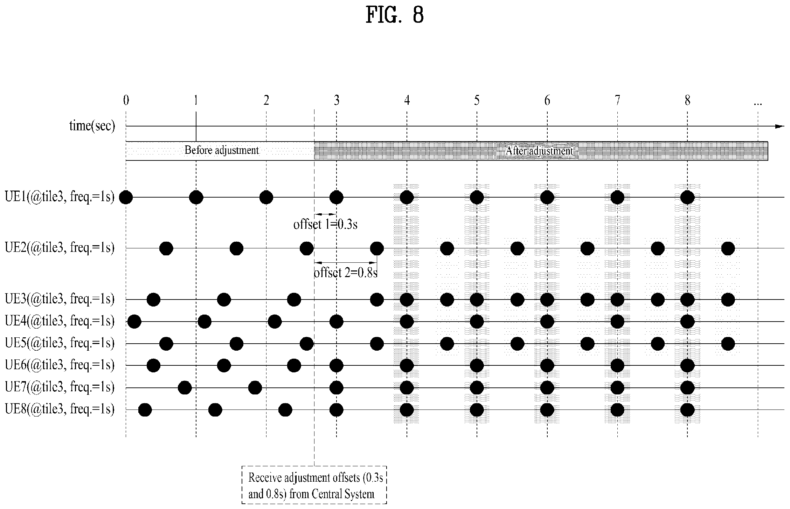

FIG. 8 shows a change in a message generation timing due to the application of an adjustment offset when a plurality of offsets are received. When there are many UEs, messages generated simultaneously may affect a processing load of a central system. Accordingly, the central system may distribute the processing load by transmitting a plurality of offsets to the UEs. When more UEs as shown in FIG. 8 enter a tile 3, if the central system intends to calculate two transmission offsets and transmit them to the UE, the central system calculates and transmits 0.3s and 0.8s as adjustment offsets to the UE so that a UE's message generation interval (period) may be evenly divided. As a result, the message generation timings of the respective UEs are distributed into two types.

On the other hand, a UE may have a message generation interval T_GenMsg temporarily becoming greater than a maximum transmission interval (or period) T_GenMsgMax due to the application of an adjustment offset, and such a message delivery blank may act as a potential problem in a smooth operation and provision of a V2X messaging-based safety service. Therefore, if the message generation interval is temporarily extended or if immediate message generation is required due to a rapid change of dynamics, the UE may generate a message immediately. In this case, the following operation is performed for the single or a plurality of the application offsets.

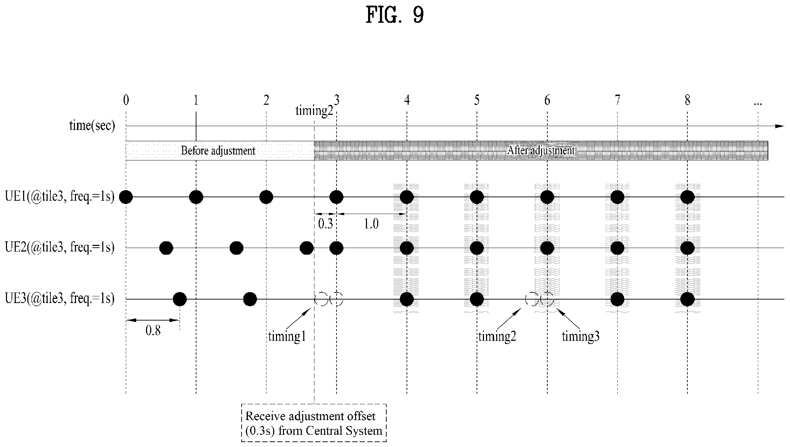

In the case of a single application offset, as shown in FIG. 9, when a UE receives a single adjustment offset 0.3s from a central system and changes a timing to enable all UEs to generate messages simultaneously from 3.0s, it becomes 'T_GenMsg > T_GenMsgMax' of the UE at a timing 1 point (dotted-line circle) in case of UE3. In this case, the UE may generate a message immediately. After the UE has generated the message at the timing 1, the UE should continue to generate messages from 3.0s according to the changed message generation timing. Yet, when a "saving mode" or the like is set due to a power amount of the UE, or when a time difference between the timing 1 (2.8s) and the changed first message generation timing (3.0s) is smaller than a minimum message generation interval T_GenMsgMin of the UE, the message generation may be omitted. In addition, the UE3 may generate a message immediately like the case at the timing 2 when a rapid change in dynamics occurs. Yet, likewise, if a time difference between the timing 2 and the changed message timing 3 after the timing 2 is smaller than T_GenMsgMin, the message generation may be omitted and a message may be generated at the changed timing (6.0s). After the UE generated the message at the timing 2, the UE should continue to generate messages from 6.0s according to the changed message generation timing.

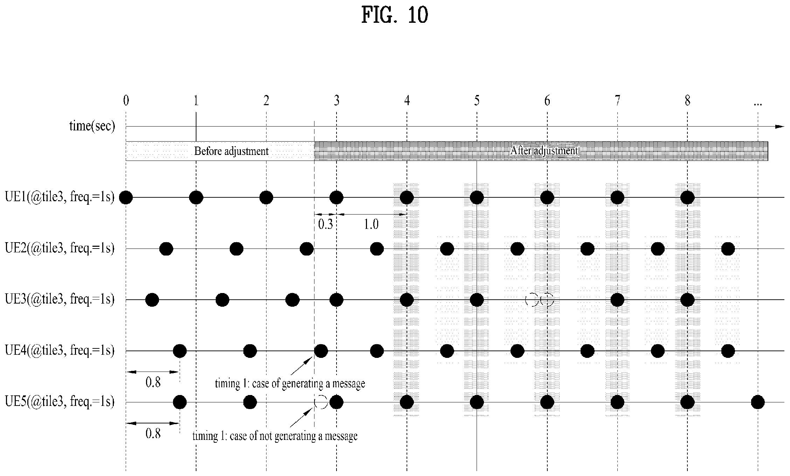

When a UE receives a plurality of adjustment offsets from a central system, a basic operation is the same as single adjustment offset reception. Yet, an adjustment offset of the UE varies depending on a case that a message is generated immediately or a case that a message is not generated in a situation where immediate message generation is possible due to a case that a message generation blank occurs or a case that immediate message generation is required due to rapid changes in dynamics. Like the embodiment of FIG. 10, when UEs are capable of applying two types of adjustment offsets (0.3s and 0.8s), UE4 selects/applies 0.3s as the adjustment offset according to the above-described adjustment offset selecting method. Yet, as it becomes 'T_GenMsg > T_GenMsgMax' at the timing 1, it happens that the UE4 can transmit a message immediately. In doing so, when the UE4 generates a message at the timing 1, it again goes through the process of selecting an adjustment offset to be applied by the UE4 from a plurality of adjustment offsets, and thus the adjustment offset 0.8s is selected and applied to a message generation timing thereafter. If the UE4 does not generate a message at the timing 1, it generates a message at a timing changed according to the first determined adjustment offset 0.3s. The same process is performed even in a situation where immediate message generation according to a rapid change in dynamics of the UE is available. As a result, each UE may continue to generate a message at a timing closest to the original message generation timing, which is processed by being distributed to a timing specified or designated by a server.

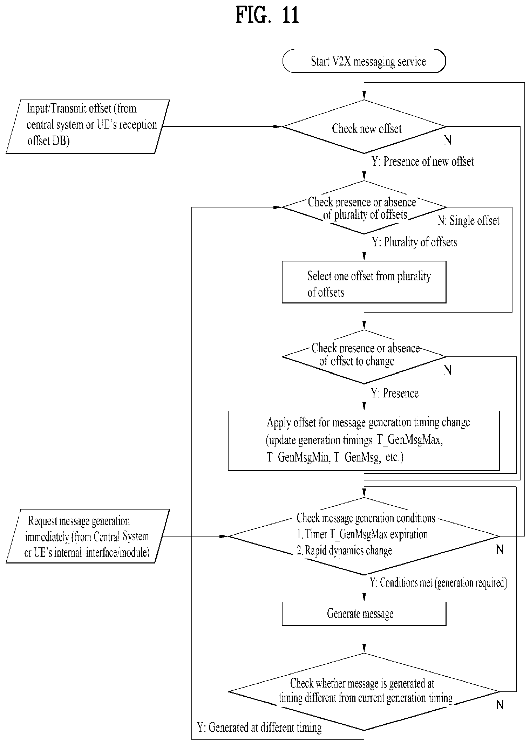

FIG. 11 is a flowchart related to the above-described method of adjusting the transmission timing of the V2X message, and a detailed description thereof may be referred to the above description.

## Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

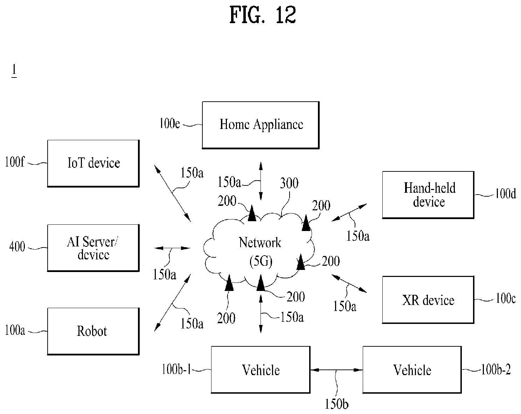

FIG. 12 illustrates a communication system 1 applied to the present disclosure.

Referring to FIG. 12, a communication system 1 applied to the present disclosure includes wireless devices, BSs, and a network. Herein, the wireless devices represent devices performing communication using RAT (e.g., 5G NR or LTE) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

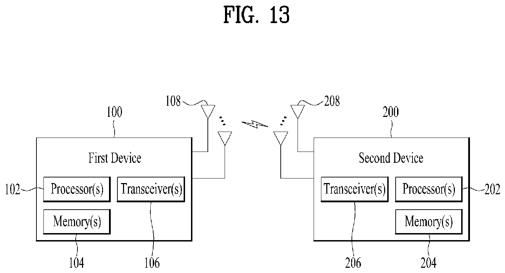

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memorie7s 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

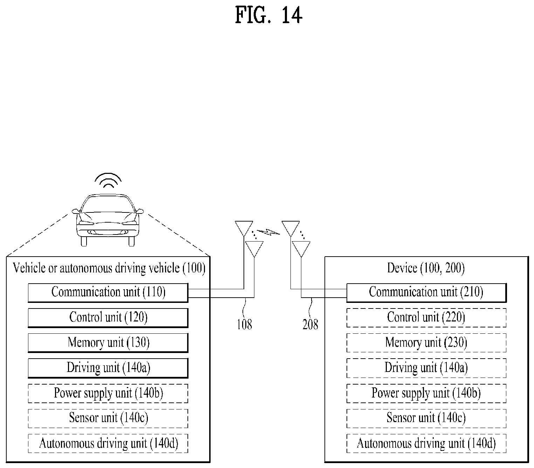

FIG. 14 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

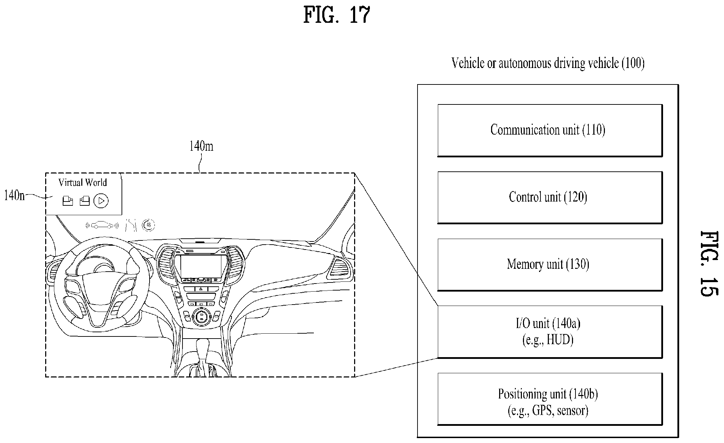

FIG. 15 illustrates a vehicle applied to the present disclosure. The vehicle may be implemented as a transport means, an aerial vehicle, a ship, etc.
Referring to FIG. 15, a vehicle 100 may include a communication unit 110, a control unit 120, a memory unit 130, an I/O unit 140a, and a positioning unit 140b.
The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.
As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

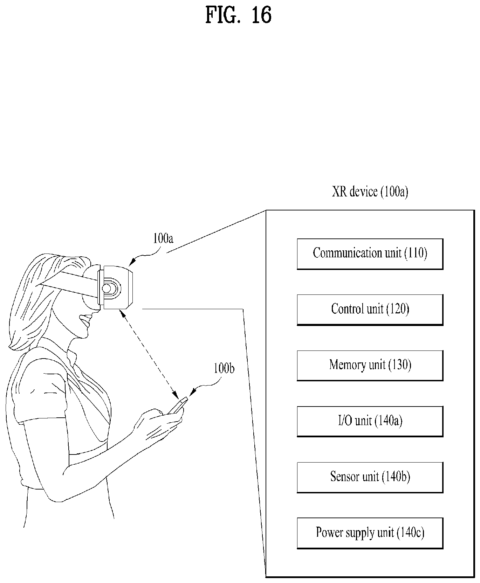

FIG. 16 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.
Referring to FIG. 16, an XR device 100a may include a communication unit 110, a control unit 120, a memory unit 130, an I/O unit 140a, a sensor unit 140b, and a power supply unit 140c.
The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.
For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

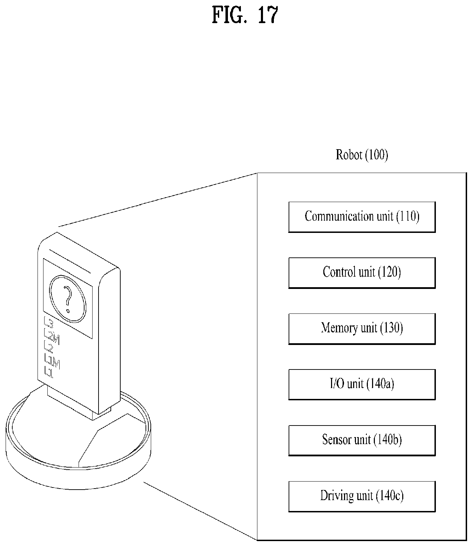

FIG. 17 illustrates a robot applied to the present disclosure. The robot may be categorized into an industrial robot, a medical robot, a household robot, a military robot, etc., according to a used purpose or field.

Referring to FIG. 17, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 13, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

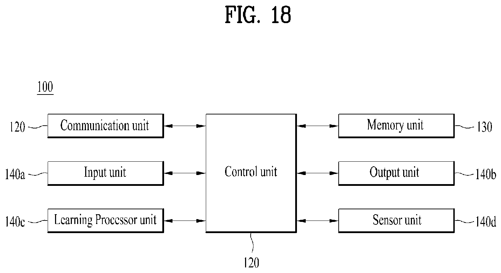

FIG. 18 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 18, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 13, respectively.

The communication unit 110 may transmit and receive wired/radio signals (e.g., sensor information, user input, learning models, or control signals) to and from external devices such as other AI devices (e.g., 100x, 200, or 400 of FIG. 12) or an AI server (e.g., 400 of FIG. 12) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 12). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 12). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

INDUSTRIAL APPLICABILITY

The above-described embodiments of the present disclosure are applicable to various mobile communication systems.

**Claims**

1. A method of performing an operation related to a Vulnerable Road User (VRU) in a wireless communication system, the method comprising:

   acquiring a global timing by the VRU;
   generating a prescribed message by the VRU; and
   transmitting the prescribed message to a server by the VRU,
   wherein an adjustment offset applied commonly to VRUs included in a VRU cluster related to the server is applied to the generating the prescribed message.

2. The method of claim 1, wherein the adjustment offset is calculated based on a geographical partition unit and a classification level value to which the VRU belongs or a collision assessment result performed by the VRU

3. The method of claim 2, wherein the classification level value is configured differently according to a device type or congestion.

4. The method of claim 1, wherein the adjustment offset is selected from one or more adjustment offsets to enable the VRU to transmit a message at a timing closest to a message transmission timing based on a period before applying the adjustment offset.

5. The method of claim 1, wherein the adjustment offset is selected from one or more adjustment offsets to enable to the VRU to generate a message most quickly.

6. The method of claim 5, wherein the selection of the adjustment offset to enable the VRU to generate the message most quickly is performed based on not transmitting the message by the VRU for a prescribed time before determining the adjustment offset.

7. The method of claim 5, wherein the selection of the adjustment offset to enable the VRU to generate the message most quickly is performed based on waking up in sleep mode by the VRU.

8. The method of claim 1, wherein the cluster related operation comprises generating a cluster or j oining a cluster.

9. The method of claim 1, wherein the one or more adjustment offsets are received from a network.

10. The method of claim 1, wherein the one or more adjustment offsets are calculated by the VRU.

**11.** The method of claim 1, wherein the message is a VRU Awareness Message (VAM).

**12.** A VRU in a wireless communication system, the VRU comprising:

at least one processor; and
at least one computer memory connected operably to the at least one processor and configured to store instructions for enabling the at least one processor to perform operations when executed,
wherein the operations comprise acquiring a global timing by the VRU, generating a prescribed message by the VRU, and transmitting the prescribed message to a server by the VRU and
wherein an adjustment offset applied commonly to VRUs included in a VRU cluster related to the server is applied to the generating the prescribed message.

**13.** A processor performing operations for a VRU in a wireless communication system, the operations comprising:

acquiring a global timing by the VRU;
generating a prescribed message by the VRU; and
transmitting the prescribed message to a server by the VRU,
wherein an adjustment offset applied commonly to VRUs included in a VRU cluster related to the server is applied to the generating the prescribed message.

**14.** A non-volatile computer-readable storage medium storing at least one computer program comprising an instruction configured to enable at least one processor to perform operations for a VRU when executed by the at least one processor, the operations comprising:

acquiring a global timing by the VRU;
generating a prescribed message by the VRU; and
transmitting the prescribed message to a server by the VRU,
wherein an adjustment offset applied commonly to VRUs included in a VRU cluster related to the server is applied to the generating the prescribed message.

# FIG. 1

# FIG. 2

EU C-ITS Trust Domain

Content provider
Road Traffic auth.
Road Operator
Region B

Internal Road Operator network
National access point
DatexII Interfacing
ETSI format optional
EU C-ITS Trust optional
...

IP-channel:
C-Roads IP-channel + security
C-Roads messages – messages and transport layer
C-Roads message signing
C-Roads services and Use cases

Channel could include interchanges

OEM back-end
Appl. provider back-end
Public back-end
Region A

Serving back-end entity B

Serving back-end entity A

ITS-G5 roadside infrastructure

Road operator channel
Free choice

1...*    1...*

1...*

1...*

1...*

1..*

1..*

1..*

Service provisioning channel
Free choice
all other communication strategies
e.g. IP-based proprietary protocols
C-V2X
5G, edge clouds
ETSI format optional
EU C-ITS Trust optional

Vehicle OBU
Smartphone app
...

End user entity

IP-channel:
C-Roads IP-channel
C-Roads messages
C-Roads message signing
C-Roads services and Use cases

EU C-ITS Trust Domain

EP 4 336 944 A1

FIG. 3

FIG. 4

```
┌─────────────────────────────┐
│      Acquire global timing  │───S401
└─────────────────────────────┘
              │
              ▼
┌─────────────────────────────┐
│   Generate prescribed message │───S402
└─────────────────────────────┘
              │
              ▼
┌─────────────────────────────┐
│ Transmit prescribed message to server │───S403
└─────────────────────────────┘
```

# FIG. 5

UEs       Central System       Other System
(Server, RCU, OBU, UE..)

Individual MSGs

Clustering/Aggregation

Cluster MSGs

MSGs
including offset

Applying the offset

Individual MSGs
(simultaneously..)

Clustering/Aggregation

Cluster MSGs

UPDATE MSGs
including offset

Applying the offset

Individual MSGs
(simultaneously..)

Clustering/Aggregation

Cluster MSGs

FIG. 6

# FIG. 7

FIG. 8

time(sec)

Before adjustment    After adjustment

UE1(@tile3, freq.=1s)

offset 1=0.3s

UE2(@tile3, freq.=1s)

offset 2=0.8s

UE3(@tile3, freq.=1s)
UE4(@tile3, freq.=1s)
UE5(@tile3, freq.=1s)
UE6(@tile3, freq.=1s)
UE7(@tile3, freq.=1s)
UE8(@tile3, freq.=1s)

Receive adjustment offsets (0.3s and 0.8s) from Central System

# FIG. 9

# FIG. 10

time(sec)

Before adjustment    After adjustment

UE1(@tile3, freq.=1s)

0.3    1.0

UE2(@tile3, freq.=1s)

UE3(@tile3, freq.=1s)

UE4(@tile3, freq.=1s)

0.8    timing 1: case of generating a message

UE5(@tile3, freq.=1s)

0.8    timing 1: case of not generating a message

EP 4 336 944 A1

# FIG. 11

Start V2X messaging service

Input/Transmit offset (from central system or UE's reception offset DB)

Check new offset — N

Y: Presence of new offset

Check presence or absence of plurality of offsets — N: Single offset

Y: Plurality of offsets

Select one offset from plurality of offsets

Check presence or absence of offset to change — N

Y: Presence

Apply offset for message generation timing change (update generation timings T_GenMsgMax, T_GenMsgMin, T_GenMsg, etc.)

Request message generation immediately (from Central System or UE's internal interface/module)

Check message generation conditions
1. Timer T_GenMsgMax expiration
2. Rapid dynamics change — N

Y: Conditions met (generation required)

Generate message

Check whether message is generated at timing different from current generation timing — N

Y: Generated at different timing

# FIG. 12

<u>1</u>

100e — Home Appliance

100f — IoT device

150a

150a — 300

200

200

100d — Hand-held device

400 — AI Server/device

150a

Network (5G)

200 — 200

150a

150a

100a — Robot

200 — 150a

150a

XR device — 100c

100b-1 — Vehicle

Vehicle — 100b-2

150b

FIG. 13

FIG. 14

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

FIG. 17

FIG. 15

Vehicle or autonomous driving vehicle (100)

Communication unit (110)

Control unit (120)

Memory unit (130)

I/O unit (140a)
(e.g., HUD)

Positioning unit (140b)
(e.g., GPS, sensor)

140m

140n

Virtual World

## FIG. 16

XR device (100a)

100a

100b

Communication unit (110)

Control unit (120)

Memory unit (130)

I/O unit (140a)

Sensor unit (140b)

Power supply unit (140c)

FIG. 17

Robot (100)

Communication unit (110)

Control unit (120)

Memory unit (130)

I/O unit (140a)

Sensor unit (140b)

Driving unit (140c)

FIG. 18

100

| 120 — Communication unit | ← → | Control unit | ← → | Memory unit — 130 |

120

| INTERNATIONAL SEARCH REPORT | International application No. |
|---|---|
| | **PCT/KR2022/006512** |

**A. CLASSIFICATION OF SUBJECT MATTER**

**H04W 74/08**(2009.01)i; **H04W 4/40**(2018.01)i; **H04W 4/90**(2018.01)i; **H04W 4/44**(2018.01)i; **H04W 4/12**(2009.01)i; **H04W 56/00**(2009.01)i; **H04W 4/08**(2009.01)i; **H04W 4/50**(2018.01)i

According to International Patent Classification (IPC) or to both national classification and IPC

**B. FIELDS SEARCHED**

Minimum documentation searched (classification system followed by classification symbols)

H04W 74/08(2009.01); H04J 11/00(2006.01); H04W 4/44(2018.01); H04W 4/46(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: VRU(Vulnerable road user), 보행자(pedestrian), 클러스터(cluster), 동기(syn), VRU 인지 메시지(VAM)

**C. DOCUMENTS CONSIDERED TO BE RELEVANT**

| Category* | Citation of document, with indication, where appropriate, of the relevant passages | Relevant to claim No. |
|---|---|---|
| Y<br>A | ETSI; Intelligent Transport Systems (ITS); Vulnerable Road Users (VRU) awareness; Part 3: Specification of VRU awareness basic service; Release 2. ETSI TS 103 300-3 V2.1.2. 20 April 2021.<br>See pages 30 and 101. | 1-3,8-14<br>4-7 |
| Y | WO 2021-066374 A1 (LG ELECTRONICS INC.) 08 April 2021 (2021-04-08)<br>See paragraph [0110]. | 1-3,8-14 |
| A | KR 10-2020-0015506 A (INTEL CORPORATION) 12 February 2020 (2020-02-12)<br>See paragraphs [0059]-[0109]. | 1-14 |
| A | KR 10-2019-0037320 A (TELEFONAKTIEBOLAGET LM ERICSSON (PUBL)) 05 April 2019 (2019-04-05)<br>See paragraphs [0006]-[0011]. | 1-14 |
| A | KR 10-2021-0040141 A (HUAWEI TECHNOLOGIES CO., LTD.) 12 April 2021 (2021-04-12)<br>See paragraphs [0167]-[0171]; and figure 1. | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 August 2022** | **12 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006512**

| Patent document cited in search report | | | Publication date (day/month/year) | Patent family member(s) | | | Publication date (day/month/year) |
|---|---|---|---|---|---|---|---|
| WO | 2021-066374 | A1 | 08 April 2021 | None | | | |
| KR | 10-2020-0015506 | A | 12 February 2020 | CN | 110809904 | A | 18 February 2020 |
| | | | | DE | 112018003399 | T5 | 12 March 2020 |
| | | | | EP | 3649826 | A1 | 13 May 2020 |
| | | | | JP | 2020-526943 | A | 31 August 2020 |
| | | | | US | 11228880 | B2 | 18 January 2022 |
| | | | | US | 2020-0120458 | A1 | 16 April 2020 |
| | | | | WO | 2019-010049 | A1 | 10 January 2019 |
| KR | 10-2019-0037320 | A | 05 April 2019 | AU | 2017-309399 | A1 | 28 February 2019 |
| | | | | AU | 2017-309399 | B2 | 29 October 2020 |
| | | | | BR | 112019002558 | A2 | 21 May 2019 |
| | | | | CN | 109792769 | A | 21 May 2019 |
| | | | | EP | 3498028 | A1 | 19 June 2019 |
| | | | | EP | 3498028 | B1 | 07 October 2020 |
| | | | | EP | 3709748 | A1 | 16 September 2020 |
| | | | | JP | 2019-531006 | A | 24 October 2019 |
| | | | | JP | 6828138 | B2 | 10 February 2021 |
| | | | | MX | 2019001526 | A | 04 July 2019 |
| | | | | NZ | 750514 | A | 25 September 2020 |
| | | | | US | 10980036 | B2 | 13 April 2021 |
| | | | | US | 2019-0191442 | A1 | 20 June 2019 |
| | | | | WO | 2018-029620 | A1 | 15 February 2018 |
| KR | 10-2021-0040141 | A | 12 April 2021 | BR | 112021002221 | A2 | 04 May 2021 |
| | | | | CN | 110830211 | A | 21 February 2020 |
| | | | | CN | 112615704 | A | 06 April 2021 |
| | | | | EP | 3836650 | A1 | 16 June 2021 |
| | | | | JP | 2021-533689 | A | 02 December 2021 |
| | | | | US | 2021-0204238 | A1 | 01 July 2021 |
| | | | | WO | 2020-030031 | A1 | 13 February 2020 |

Form PCT/ISA/210 (patent family annex) (July 2019)